# EUROPÄISCHE PATENTSCHRIFT

(11) **EP 1 812 777 B1**
(45) Veröffentlichungstag und Bekanntmachung des Hinweises auf die Patenterteilung: **21.04.2010**
(21) Anmeldenummer: 06761912.2
(22) Anmeldetag: 11.05.2006
(51) Int. Cl.: G01M 3/22

(54) **SAMMELLEITUNG ZUR LECKAGEÜBERWACHUNG UND LECKAGEORTUNG**
COLLECTING PIPE FOR MONITORING AND LOCATING LEAKS
CONDUITE COLLECTRICE DESTINEE A CONTROLER ET LOCALISER DES FUITES

(30) Priorität: 20.05.2005 DE 102005023255
(43) Veröffentlichungstag der Anmeldung: 01.08.2007
(73) Patentinhaber: AREVA NP GmbH, 91052 Erlangen (DE)
(72) Erfinder: ISSEL, Wolfgang, 76185 Karlsruhe (DE)
(74) Vertreter: Mörtel & Höfner
(86) Internationale Anmeldenummer: PCT/EP2006/004405
(87) Internationale Veröffentlichungsnummer: WO 2006/122696

(56) Entgegenhaltungen:
- DE-C1- 19 721 081
- US-A- 4 735 095

## Beschreibung

Die Erfindung betrifft eine Sammelleitung zur Leckageüberwachung und Leckageortung an einer Anlage.

Aus der EP 0 175 219 B1 ist eine Sammelleitung bekannt, die aus einem Rohr besteht, das für einen nachzuweisenden Stoff undurchlässig ist, und das in seiner Längsrichtung mit einer Vielzahl von mit einem mikroporösen sintermetallischen Werkstoff verschlossenen Öffnungen versehen ist. Durch diese Öffnungen kann ein aus einer Leckage in einem Anlagenteil, beispielsweise die Primärkreisleitung eines Druckwasserkernreaktors, in die Umgebung der Sammelleitung austretender und zu detektierender Stoff, im Beispiel Wasser oder Wasserdampf, in das Innere des Rohres diffundieren. Mit einem aus der DE 24 31 907 C3 bekannten Verfahren wird dann der Ort ermittelt, an dem der Stoff in die Sammelleitung eingedrungen ist. Dieser Ort entspricht der Stelle, an der der Stoff aus dem überwachten Anlagenteil ausgetreten ist. Hierzu wird mit einer an die Sammelleitung angeschlossenen Pumpe der in die Sammelleitung eingedrungene Stoff gemeinsam mit einem in der Sammelleitung befindlichen Trägergas einem ebenfalls an die Sammelleitung angeschlossenen Sensor zugeleitet. Bei bekannter Strömungsgeschwindigkeit kann aus der Zeitspanne zwischen dem Einschalten der Pumpe und dem Eintreffen des Stoffes am Sensor der Ort, an dem der Stoff in die Sammelleitung eindringt und damit der Leckageort am Anlagenteil ermittelt werden. Als besonders geeignete sintermetallische Werkstoffe haben sich für eine Vielzahl von Anwendungsfällen Sintermetalle aus Reinmetallen, insbesondere Edelstahl und Nickel Ni, herausgestellt, wobei letzteres bei Porendurchmessern im Bereich von wenigen µm insbesondere für den Nachweis von Wasser oder Wasserdampf geeignet ist. Diese Sintermetalle werden durch Sinterung bei Temperaturen knapp unterhalb der Schmelztemperatur in reduzierender Atmosphäre, insbesondere in Anwesenheit von Wasserstoff, hergestellt, um eine gute metallurgische Verbindung zwischen den verpressten Körnern sicherzustellen.

Eine Sammelleitung zur Leckageüberwachung und Leckageortung an einer Anlage, die aus einem für einen zu überwachenden Stoff undurchlässigen Werkstoff besteht und mit einer Vielzahl voneinander in ihrer Längsrichtung beabstandeter Öffnungen versehen ist, die mit einem Filterelement aus einem sintermetallischen Werkstoff verschlossen sind, das für den Stoff durchlässig ist, ist auch aus der DE 197 21 081 C1 bekannt.

Der die Öffnungen verschließende mikroporöse sintermetallische Werkstoff hat dabei zwei sich widersprechende Aufgaben zu erfüllen. Zum einen muss er eine hinreichende Porosität aufweisen, um eine schnelle Diffusion des zu detektierenden Stoffes in das Innere der Sammelleitung, also eine kleine Ansprechzeit zu ermöglichen. Zum anderen aber muss er auch einen ausreichend hohen Strömungswiderstand haben, um sicherzustellen, dass das in der Sammelleitung befindliche und zum Transport des Stoffes dienende Trägergas beim Pumpvorgang weitestgehend in der Sammelleitung verbleibt.

Der Erfindung liegt nun die Aufgabe zu Grunde, eine Sammelleitung zur Leckageüberwachung und Leckageortung an einer Anlage anzugeben, die den Nachweis eines zu detektierenden Stoffes mit hoher Empfindlichkeit und geringen Ansprechzeiten ermöglicht.

Die genannte Aufgabe wird gemäß der Erfindung gelöst, mit einer Sammelleitung mit den Merkmalen des Patentanspruches 1. Gemäß diesen Merkmalen besteht die Sammelleitung aus einem für einen zu überwachenden Stoff undurchlässigen Werkstoff und ist mit einer Vielzahl voneinander in Längsrichtung beabstandeter Öffnungen versehen, die mit einem mikroporösen Filterelement aus einem sintermetallischen Werkstoff verschlossen sind, das für den Stoff durchlässig ist und einer Wärmebehandlung in oxidierender Umgebung unterzogen worden ist. Eine solche Wärmebehandlung in oxidierender Umgebung, d.h. in Anwesenheit von Sauerstoff, hat nun überraschenderweise ergeben, dass bei unveränderter Porenweite die Diffusionsgeschwindigkeit für den Stoff, insbesondere Wasserdampf oder Wasser, signifikant zunimmt, so dass eventuell auftretende Leckagen früher erkannt und geortet werden können. Sehr wahrscheinliche Ursache hierfür ist die verstärkte Ausbildung einer Oxidschicht auf der Porenoberfläche der Körnermatrix des Sintermetalls. Diese vermag den eindiffundierenden Wasserdampf schneller und in höherer Konzentration ins Schlauchinnere zu leiten als die dünne Oxidschicht eines unbehandelten Sintermetalls.

Eine besonders effiziente Verbesserung der Durchlässigkeit des Filterelementes durch eine Wärmebehandlung in oxidierender Umgebung wird erzielt, wenn dieser aus Nickel Ni besteht.

Die Wärmebehandlung erfolgt vorzugsweise in sauerstoffhaltiger Atmosphäre in einem Temperaturbereich zwischen 600°C und 800°C. Dieser Temperaturbereich liegt mindestens um 400°C unter der Sintertemperatur des jeweiligen sintermetallischen Werkstoffes.

In einer bevorzugten Ausgestaltung der Erfindung wird die Wärmebehandlung nach dem Sintern durchgeführt.

In einer weiteren vorteilhaften Ausgestaltung der Erfindung besteht die Sammelleitung aus Stahl und ist an ihrer Innenoberfläche elektropoliert. Diese Maßnahme ist geeignet, die Adsorption des transportierten Stoffes an der großflächigen Oxidschicht der im unpolierten Zustand stark mikro-rauen Innenoberfläche der Sammelleitung durch starke Verringerung dieser Oberfläche erheblich zu vermindern und dadurch die Transporteigenschaften des eindiffundierten Stoffes wesentlich zu verbessern. Hierdurch lassen sich größere Leitungslängen bei höherer Messempfindlichkeit realisieren.

Alternativ hierzu kann die Sammelleitung auch mit einem Werkstoff beschichtet sein, der für den nachzuweisenden Stoff eine geringe Ad- und Absorptionsfähigkeit aufweist, beispielsweise ein Edelmetall, insbesondere Gold. Grundsätzlich geeignet sind jedoch auch nichtmetallische Beschichtungen, z. B. keramischer oder anderer chemischer Natur, die auf Dauer einer Arbeitstemperatur von ca. 300°C standhalten. In diesen Fällen ist es nicht erforderlich eine Sammelleitung aus Stahl zu verwenden.

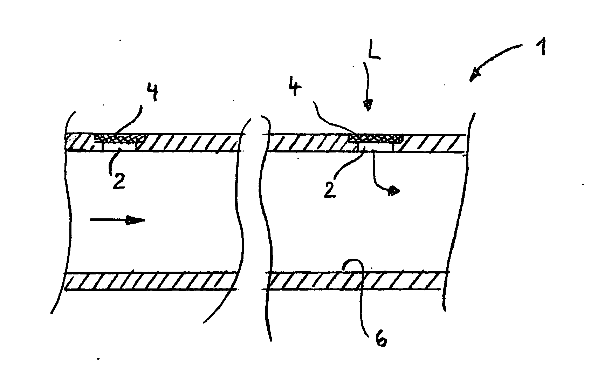

Zur weiteren Erläuterung der Erfindung wird auf das Ausführungsbeispiel der Zeichnung verwiesen, in deren einziger Figur eine Sammelleitung gemäß der Erfindung in einem schematischen Schnittbild dargestellt ist.

Gemäß dieser Figur ist die Sammelleitung 1 mit einer Vielzahl voneinander in ihre Längsrichtung beabstandeter Öffnungen 2 versehen, die mit einem Filterelement 4 aus einem mikroporösen sintermetallischen Werkstoff verschlossen sind. Das Filterelement 4 ist für einen zu überwachenden Stoff L durchlässig. Die Sammelleitung 1 besteht, mit Ausnahme des Filterelementes 4, aus einem für den Stoff L undurchlässigen Werkstoff, im Ausführungsbeispiel aus Edelstahl. Bei der Sammelleitung 1 kann es sich je nach Verwendungszweck um ein flexibles oder starres Rohr mit kreisrundem Querschnitt oder anderen Querschnittsformen handeln. Die Sammelleitung 1 kann auch aus mehreren Rohrabschnitten zusammengesetzt sein, die über Zwischenstücke miteinander verbunden sind, in denen die Filterelement 4 eingesetzt sind.

Die Sammelleitung 1 ist an ihrer Innenoberfläche mechanisch, chemisch oder elektrochemisch behandelt, um ihr Ad- und Absorptionsvermögen für den bei der Leckage eintretenden Stoff L zu reduzieren. Alternativ hierzu kann die Innenoberfläche 6 auch mit einer Schicht aus einem Edelmetall, beispielsweise Gold Au, einem keramischen, mineralischen, insbesondere silikatbasierten oder anderen temperaturbeständigen Werkstoff, versehen sein.

## Patentansprüche

1. Sammelleitung (1) zur Leckageüberwachung und Leckageortung an einer Anlage, die aus einem der für einen überwachenden Stoff (L) undurchlässigen Werkstoff besteht und mit einer Vielzahl voneinander in ihrer Längsrichtung beabstandeter Öffnungen (2) versehen ist, die mit einem Filterelement (4) aus einem sintermetallischen Werkstoff verschlossen sind, das für den Stoff (L) durchlässig ist, **dadurch gekennzeichnet dass** das Filterelement einer Wärmebehandlung in oxidierender Umgebung unterzogen worden ist.

2. Sammelleitung (1) nach Anspruch 1, bei der als Sintermetall Nickel Ni vorgesehen ist.

3. Sammelleitung (1) nach Anspruch 2, bei der die Wärmebehandlung in sauerstoffhaltiger Atmosphäre in einem Temperaturbereich zwischen 600°C und 800°C erfolgt.

4. Sammelleitung (1) nach einem der vorhergehenden Ansprüche, bei der die Wärmebehandlung nach dem Sintern durchgeführt worden ist.

5. Sammelleitung (1) nach einem der vorhergehenden Ansprüche, die aus Stahl besteht und deren Innenoberfläche elektropoliert ist.

6. Sammelleitung (1) nach einem der vorhergehenden Ansprüche, deren Innenoberfläche mit einem Edelmetall beschichtet ist.

## Claims

1. Collecting line (1) for monitoring and locating leaks in an installation, which line consists of a material that is impermeable to a substance (L) to be monitored and is provided with a multiplicity of openings (2) spaced apart in its longitudinal direction, which are closed with a filter element (4) of a sintered metallic material that is permeable to the substance (L), **characterized in that** the filter element has been subjected to a heat treatment in an oxidizing atmosphere.

2. Collecting line (1) according to Claim 1, in which nickel Ni is provided as the sintered metal.

3. Collecting line (1) according to Claim 2, in which the heat treatment is performed in an atmosphere containing oxygen, in a temperature range between 600°C and 800°C.

4. Collecting line (1) according to one of the preceding claims, in which the heat treatment has been carried out after the sintering.

5. Collecting line (1) according to one of the preceding claims, which consists of steel and the inner surface of which is electropolished.

6. Collecting line (1) according to one of the preceding claims, the inner surface of which is coated with a high-grade metal.

## Revendications

1. Conduit collecteur pour la surveillance et la localisation des fuites sur une installation, composé d'un matériau ne laissant pas passer la matière (L) à surveiller et une pluralité d'ouvertures (2) à distance l'une de l'autre dans leur sens longitudinal qui sont fermées par un élément filtrant (4) en matériau métallique fritté qui laisse passer la matière (L), **caractérisé en ce que** l'élément filtrant est soumis à un traitement thermique dans un environnement oxydant.

2. Conduit collecteur (1) selon la revendication 1, dans lequel du nickel Ni est prévu comme métal fritté.

3. Conduit collecteur (1) selon la revendication 2, dans lequel le traitement thermique a lieu dans une atmosphère oxygénée dans une plage de température entre 600°C et 800°C.

4. Conduit collecteur (1) selon l'une des revendications précédentes, dans lequel le traitement thermique est effectué après le frittage.

5. Conduit collecteur (1) selon l'une des revendications précédentes qui est en acier et dont la surface intérieure est électropolie.

6. Conduit collecteur (1) selon l'une des revendications précédentes dont la surface intérieure est recouverte d'un métal précieux.
